# EUROPEAN PATENT APPLICATION

(11) **EP 4 832 147 A1**
(43) Date of publication of application: **28.10.2026**
(21) Application number: 24907711.6
(22) Date of filing: 15.10.2024
(51) Int. Cl.: H01M 10/54, B03C 1/02, B03D 1/00, B09B 3/40, B09B 101/16

(54) **METHOD OF DISPOSAL OF WASTE BATTERIES**

(30) Priority: 18.12.2023 KR 20230185042
(71) Applicant: POSCO Holdings Inc., Pohang-si, Gyeongsangbuk-do 37859 (KR)
(72) Inventor: PARK, Chonglyuck, Pohang-si, Gyeongsangbuk-do 37859 (KR); KIM, Wanyi, Pohang-si, Gyeongsangbuk-do 37859 (KR); HAN, Sangwoo, Pohang-si, Gyeongsangbuk-do 37859 (KR); LEE, Juseung, Pohang-si, Gyeongsangbuk-do 37859 (KR); PARK, Junyong, Pohang-si, Gyeongsangbuk-do 37859 (KR)
(74) Representative: Pfenning, Meinig & Partner mbB
(86) International application number: PCT/KR2024/015636
(87) International publication number: WO 2025/135426

(57) **Abstract**

The present invention relates to a battery processing method. The battery processing method of the present invention comprises preparing an output obtained by reductively heat-treating, at a high temperature, crushed materials recovered from a waste battery, magnetically separating the output into a first magnetic body and a first non-magnetic body, pulverizing the first magnetic body to separate the first magnetic body into a second magnetic body and a second non-magnetic body, and flotation-selecting the first non-magnetic body.

## Description

### [TECHNICAL FIELD]

The present invention relates to a waste battery, and more particularly, to a method for processing a waste battery for efficiently recovering materials such as valuable metals, lithium oxide, graphite, and copper by processing the waste battery.

### [BACKGROUND ART]

As demand for electric vehicles has become active worldwide, the problem of processing waste batteries generated from the electric vehicles has emerged as a social issue. In the case of lithium secondary batteries, which are main raw materials of the waste batteries, organic solvents, explosive materials, and heavy metal materials such as Ni, Co, Mn, and Fe are contained. However, Ni, Co, Mn, and Li have high scarcity value as valuable metals, and recovery and recycling processes after disposal of lithium secondary batteries have emerged as an important research field.

Specifically, a lithium secondary battery mainly includes copper and aluminum used as current collectors, an oxide containing Li, Ni, Co, and Mn constituting a positive electrode material, and graphite used as a negative electrode material, and includes a separator separating the positive electrode material and the negative electrode material and an electrolyte injected into the separator. As a solvent constituting the electrolyte solution and a solvent used as a salt, carbonate organic materials such as ethylene carbonate and propylene carbonate are mainly mixed and used, and, for example, LiPF₆ is used.

As described above, the lithium secondary battery is composed of heavy metal materials such as Ni-Co-Mn-Fe, carbon, and other electrolyte materials, among which Ni, Co, Mn, and Li are valuable as valuable metals.

Recycling for recovery for battery raw materials may generally recover valuable metals through disassembly, discharge, crushing, heat treatment, recovery, and a wet process of a battery. In the case of the discharge, brine discharge is performed, and at this time, materials such as Na, K, Mg, Ca, and Cl introduced therein are included as impurities in recovered raw materials.

After heat treatment, the recovered material has different products formed depending on a heat treatment temperature. When heat treatment is performed at a temperature of 600°C or lower, the recovered material is called black powder and is in a powder form in which oxides of Ni-Co-Mn-Li and carbon of a negative electrode material are mixed, and Al and Cu may be included in extremely small amounts because they are removed in advance.

When the black powder is heat-treated at a high temperature of 1,000°C or higher, metal oxides are reduced and alloyed by the carbon of the negative electrode material, thereby obtaining a black alloy containing such alloy components, carbon, and other materials. Accordingly, research is required to recover, by material type, valuable metals, lithium oxide, graphite, and the like from the black alloy, thereby increasing a recovery rate of valuable metals.

### [SUMMARY OF THE INVENTION]

### [Technical Problem]

A battery processing method according to an embodiment of the present invention is intended to provide a method of efficiently recovering, by material type, materials such as valuable metals, lithium oxide, and graphite from a black alloy obtained from black powder, thereby increasing recovery rates of valuable metals and graphite.

### [Technical Solution]

A battery processing method according to an embodiment of the present invention may include preparing an output obtained by reductively heat-treating, at a high temperature, crushed materials recovered from a waste battery, magnetically separating the output into a first magnetic body and a first non-magnetic body, pulverizing the first magnetic body to separate the first magnetic body into a second magnetic body and a second non-magnetic body, and flotation-selecting the first non-magnetic body. In an embodiment, the preparing of the output obtained by reductively heat-treating, at a high temperature, crushed materials recovered from the waste battery may include preparing a battery, crushing the battery into battery crushed materials, and heat-treating the crushed battery crushed materials in a temperature range of 600°C to 1,500°C.

In an embodiment, the heat-treating may be performed at an oxygen concentration of 0.1 vol% to 2.0 vol%. In an embodiment, the first magnetic body may include a valuable metal alloy including valuable metals, and at least a portion of the valuable metal alloy may include a core-shell structure in which a lithium compound is disposed on at least a partial region of a surface of the valuable metal alloy.

In an embodiment, the second non-magnetic body may include at least one of a compound containing lithium and graphite. In an embodiment, the magnetic separation may be performed at a magnetic force strength in a range of 1,000 Gauss to 5,000 Gauss.

In an embodiment, the method may further include additionally separating the first magnetic body based on a particle size of 50 µm to 70 µm. In an embodiment, the pulverizing of the output having magnetism among the magnetically separated outputs to separate the second magnetic body and the second non-magnetic body may be performed at a shear force in a range of 1 m/sec to 5 m/sec.

In an embodiment, the pulverizing of the output having magnetism among the magnetically separated outputs to separate the second magnetic body and the second non-magnetic body may be performed for 20 minutes to 80 minutes. In an embodiment, the pulverizing of the output having magnetism among the magnetically separated outputs to separate a magnetic body and a non-magnetic body may be performed by one of particle size separation, flotation selection, and magnetic separation after pulverizing the output having magnetism.

In an embodiment, the particle size separation may be performed based on a particle size of 70 µm to 80 µm. In an embodiment, the flotation-selecting may select a float including graphite and a precipitate including valuable metals.

In an embodiment, the precipitate may be magnetically separated to recover a material including valuable metals, and the recovered material may be pulverized together with the output having magnetism. In an embodiment, after the pulverizing of the output having magnetism among the magnetically separated outputs to separate the magnetic body and the non-magnetic body, the method may include drying a final output.

In an embodiment, the drying of the final output may be performed in a temperature range of 80°C to 200°C. In an embodiment, in the preparing of the output obtained by reductively heat-treating, at a high temperature, crushed materials recovered from the waste battery, at least a portion of the output may include a valuable metal recovery composition including a core portion including a valuable metal recovery alloy and a shell portion disposed on the core portion and including a lithium compound.

### [Advantageous Effects]

The battery processing method according to an embodiment of the present invention includes magnetically separating and pulverizing an output subjected to high-temperature reductive heat treatment, thereby efficiently recovering, by material type, materials such as valuable metals, lithium oxide, and graphite from a black alloy obtained from black powder and increasing recovery rates of valuable metals and graphite.

### [BRIEF DESCRIPTION OF THE DRAWINGS]

FIGS. 1A to 1C are photographs of a valuable metal recovery alloy, a lithium compound, and a graphite-based material of recovered materials recovered from a waste battery according to an embodiment of the present invention.
FIG. 2 is a flowchart of a battery processing method according to an embodiment of the present invention.
FIG. 3 is an XRD analysis result of a black alloy formed after heat treatment according to an embodiment of the present invention.
FIG. 4 is an SEM photograph of a composition for recovering valuable metals.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

In addition, in the present specification, unless otherwise stated, % means wt%.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

Hereinafter, embodiments of the present invention will be described in detail. However, these are provided as examples, and the present invention is not limited thereto, and the present invention is only defined by the scope of the claims to be described below.

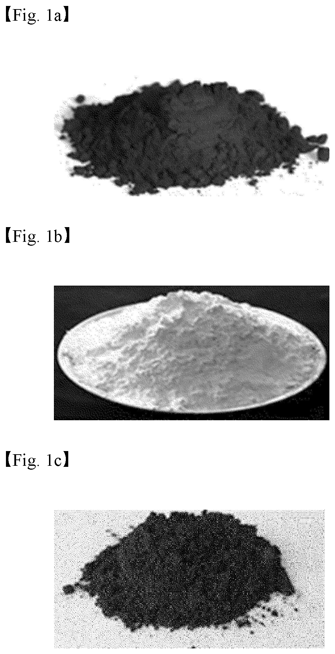

FIGS. 1A to 1C are photographs of a valuable metal recovery alloy, a lithium compound, and a graphite-based material of recovered materials recovered from a waste battery according to an embodiment of the present invention.

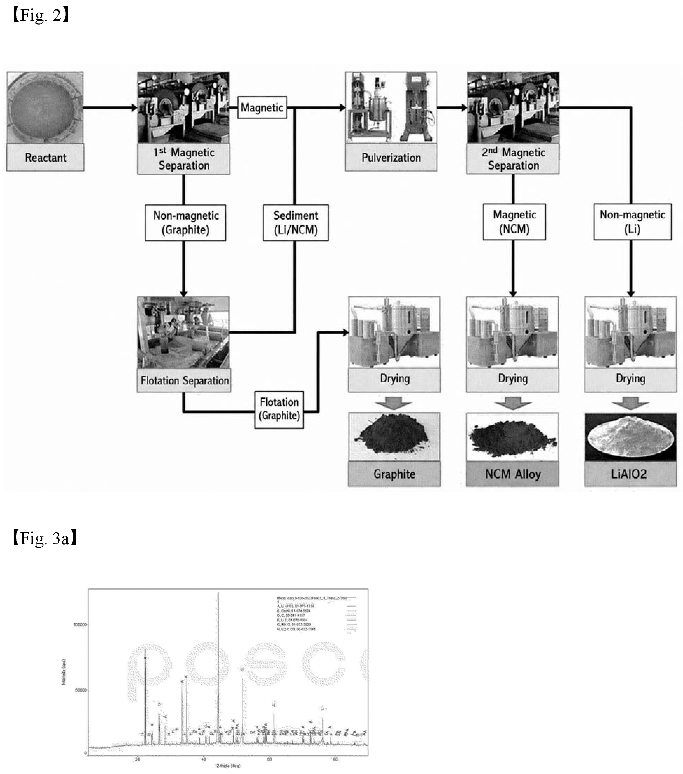

Referring to FIGS. 1A to 1C, the recovered materials recovered from a waste battery according to an embodiment of the present invention include, based on 100 wt% of the recovered materials, 20 wt% to 35 wt% of a valuable metal recovery alloy, 25 wt% to 50 wt% of a lithium compound, and the balance of a graphite-based material. The recovered materials recovered from the waste battery may be recovered materials recovered by the battery processing method described below with reference to FIG. 2. Specifically, the recovered materials may be a valuable metal recovery alloy including valuable metals, a lithium compound including lithium, and the balance of a graphite-based material.

In an embodiment, based on 100 wt% of the recovered materials, 20 wt% to 35 wt% of the valuable metal recovery alloy, 25 wt% to 50 wt% of the lithium compound, and the balance of the graphite-based material may be included. From the battery processing method described below, the valuable metal recovery alloy including valuable metals, the lithium compound including lithium, and the graphite-based material including carbon may be recovered in powder form.

In an embodiment, based on 100 wt% of the recovered materials, the valuable metal recovery alloy may be 20 wt% to 35 wt%. Specifically, the valuable metal recovery alloy may be 25 wt% to 30 wt%. The valuable metal recovery alloy may be a material including valuable metals such as Ni, Co, and Mn.

As the wt% of the valuable metal recovery alloy in the recovered materials satisfies the above-described range, there is an advantage of increasing recovery rates of valuable metals such as Ni, Co, and Mn. When the upper limit of the above-described range is exceeded, the valuable metal recovery rate can be increased, but there is a problem of being uneconomical. When the lower limit of the above-described range is not satisfied, there is a problem in that the valuable metal recovery rate decreases.

In an embodiment, the valuable metal recovery alloy may include, based on 100 wt% of the entire valuable metal recovery alloy, a total amount of Ni, Co, and Mn of 90 wt% or more and the balance of impurities. Specifically, the total amount of Ni, Co, and Mn may be 90 wt% to 96 wt%, and more specifically 92 wt% to 95 wt%.

When the total amount of Ni, Co, and Mn in the valuable metal recovery alloy satisfies the above-described range, the recovery rate of valuable metals can be increased. When the total amount of Ni, Co, and Mn in the valuable metal recovery alloy is outside the above-described range, there is a problem of no economic feasibility or a low recovery rate of valuable metals.

In an embodiment, based on 100 wt% of the entire valuable metal recovery alloy, nickel (Ni) may be included in a range of 50 wt% to 60 wt%. Specifically, nickel may be included in a range of 52 wt% to 58 wt%.

When the nickel content exceeds the upper limit of the above-described range, there is a problem of a decreased leaching rate due to formation of nickel carbide (Ni₃C), and when the nickel content is below the lower limit of the above-described range, there is a problem of a decreased Ni recovery rate in leaching and solvent extraction.

In an embodiment, based on 100 wt% of the entire valuable metal recovery alloy, cobalt (Co) may be included in a range of 18 wt% to 28 wt%. Specifically, cobalt may be included in a range of 20 wt% to 26 wt%.

When the cobalt content exceeds the upper limit of the above-described range, there is a problem in that a leaching rate decreases due to formation of cobalt carbide. When the cobalt content is below the lower limit of the above-described range, there is a problem in that a Co recovery rate decreases in leaching and solvent extraction.

In an embodiment, based on 100 wt% of the entire valuable metal recovery alloy, manganese (Mn) may be included in a range of 10 wt% to 20 wt%. Specifically, cobalt may be included in a range of 12 wt% to 18 wt%.

When the manganese content exceeds the upper limit of the above-described range, there is a problem in that a leaching rate decreases due to formation of manganese carbide. When the manganese content is below the lower limit of the above-described range, there is a problem in that a Mn recovery rate decreases in leaching and solvent extraction.

In an embodiment, based on 100 wt% of the entire valuable metal recovery alloy, lithium (Li) may be included in a range of 0.01 wt% to 5 wt%. Specifically, the lithium may be included in a range of 0.05 wt% to 0.15 wt%.

As the lithium satisfies the above-described range, there is an advantage of maximizing a Li recovery rate during a Li smelting process. When the upper limit of the above-described range is exceeded, there is a problem of a decreased Ni and Co recovery rate. When the lower limit of the above-described range is not satisfied, there is a problem in that the Li recovery rate during the Li smelting process decreases, thereby increasing process costs.

In an embodiment, the valuable metal recovery alloy may include copper (Cu) in a range of 1.0 wt% to 7 wt%. Specifically, the copper may be included in a range of 3 wt% to 5 wt%.

When the copper content exceeds the upper limit of the above-described range, there is a problem of process costs due to an increase in the amount of CuSO₄ precipitated in leaching and solvent extraction. When the copper content is below the lower limit of the above-described range, it is difficult to form low-melting-point Ni-Co-Mn, thereby causing a problem of an increase in the amount of unreacted materials. In an embodiment, the copper may be bonded to nickel (Ni) among the valuable metals to form an alloy.

In an embodiment, the valuable metal recovery alloy may include carbon (C) in a range of 0.1 wt% to 10 wt%. As the carbon satisfies the above-described range, an actual yield can be increased, and processing time in a wet process can be reduced. Specifically, the carbon may be included in a range of 1 wt% to 7 wt%.

When the upper limit of the above-described range is exceeded, the negative electrode material remains in an unreacted state, alloying is not properly performed, and valuable metal oxides remain in the positive electrode material. When the lower limit of the above-described range is not satisfied, there is a problem in that lithium may be lost due to a high temperature.

In an embodiment, the valuable metal recovery alloy may include aluminum (Al) in a range of 0.25 wt% to 30 wt%. When the aluminum content exceeds the upper limit of the above-described range, there is a problem of decreased Ni and Co recovery rates during leaching and solvent extraction processes. When the aluminum content is below the lower limit of the above-described range, formation of LiAlO₂ is difficult, thereby causing a problem of a decreased Li recovery rate.

In an embodiment, based on 100 wt% of the recovered materials, the lithium compound may include 25 wt% to 50 wt%. Specifically, the lithium compound may include 30 wt% to 40 wt%. In an embodiment, the lithium compound may be a compound containing lithium. For example, the lithium compound may include lithium oxide, and the lithium oxide may include lithium aluminum oxide.

As the lithium compound satisfies the above-described range, the recovery rate of lithium, which is one of the valuable metals, can be increased. When the lithium compound is below the lower limit of the above-described range, this means that a large amount of Li was lost to an NCM alloy or graphite, which causes a problem of a decreased Li recovery rate. Since the Li content of an input raw material decreases when Li is recovered in a downstream wet smelting process, there is also a problem of increased process costs.

In an embodiment, based on 100 wt% of the lithium compound, the lithium compound may include lithium (Li) of 10 wt% to 20 wt%. Specifically, the lithium may be 12 wt% to 18 wt%.

When the lithium content exceeds the upper limit of the above-described range, it means that lithium does not react with Al to form a lithium compound in the form of LiAlO₂, but a ratio of lithium hydroxide, lithium fluoride, lithium carbonate, and the like is high, and thus there is a problem in that methods such as water leaching and acid leaching should be considered in a downstream wet smelting process. When the lithium content is below the lower limit of the above-described range, this means that most of the lithium compound was recovered in the form of LiAlO₂ having low water solubility and that lithium compounds having high water solubility were dissolved in water during the selection process, thereby causing a problem in that lithium must be recovered again from the water used in the selection process.

In an embodiment, based on 100 wt% of the lithium compound, the lithium compound may include aluminum (Al) of 20 wt% to 30 wt%. Specifically, aluminum may be 23 wt% to 28 wt%. As the aluminum content satisfies the above-described range, a lithium compound is formed through physical or chemical bonding with lithium, thereby increasing a lithium yield.

When the aluminum content exceeds the upper limit of the above-described range, Al₂(SO₄)₃ is excessively generated in leaching and solvent extraction processes, thereby causing problems of increased costs for Ni and Co solvent extraction and crystallization processes and decreased Ni and Co recovery rates. When the aluminum content is below the lower limit of the above-described range, there is a problem in that formation of Li-Al-O oxide is inferior due to insufficient aluminum content.

In an embodiment, based on 100 wt% of the lithium compound, the lithium compound may have a carbon (C) content in a range of 1 wt% to 7 wt%. Specifically, the carbon (C) content may be 3 wt% to 5 wt%. As the carbon content satisfies the above-described range, there is an advantage in optimizing wet treatment of the valuable metal recovery composition.

When the carbon content exceeds the upper limit of the above-described range, there is a problem of a decreased leaching rate due to formation of nickel carbide (Ni₃C). When the carbon content is below the lower limit of the above-described range, contents of other impurities such as Si increase, thereby causing a problem of decreased recovery rates of valuable metals such as Ni and Co in solvent extraction after the leaching process.

In an embodiment, based on 100 wt% of the recovered materials, the graphite-based material may include 25 wt% to 50 wt%. Specifically, the graphite-based material may include 30 wt% to 40 wt%. The content of the graphite-based material may be such that a large amount of graphite-based material is generated as a high-temperature reduction reaction is performed in a low-oxygen content range in which generation of carbon dioxide is reduced. As the graphite-based material satisfies the above-described range, a recycling yield of graphite-based material usable as a negative electrode material can be increased.

When the graphite-based material exceeds the upper limit of the above-described range, the graphite content is excessively high, thereby causing a problem of a decreased recovery rate of valuable metals. When the graphite-based material is below the lower limit of the above-described range, there is a problem of a low recovery rate of graphite.

In an embodiment, the graphite-based material may have a carbon (C) content of 80 wt% to 90 wt%, and may include the balance of impurities. The carbon (C) content may be 83 wt% to 87 wt%. As the carbon content satisfies the above-described range, high-purity graphite including carbon can be obtained.

When the carbon content exceeds the upper limit of the above-described range, there is a problem of a decreased recovery rate of valuable metals. When the carbon content is below the lower limit of the above-described range, there is a problem of a low recovery rate of graphite.

In an embodiment, based on 100 wt% of the graphite-based material, the graphite-based material may have a copper (Cu) content of 13 wt% to 25 wt%. Specifically, the copper content may be 15 wt% to 20 wt%. When the copper content exceeds the upper limit of the above-described range, there is a problem in that the amount of acid used increases when Cu is removed in a process of refining graphite into high-purity graphite.

FIG. 2 is a flowchart of a battery processing method according to an embodiment of the present invention.

Referring to FIG. 2, the battery processing method includes preparing an output obtained by reductively heat-treating, at a high temperature, crushed materials recovered from a waste battery, magnetically separating the output, and pulverizing an output having magnetism among the magnetically separated outputs to separate a magnetic body and a non-magnetic body. The battery processing method of the present invention provides a battery processing method capable of increasing a recovery rate of valuable metals by efficiently performing magnetic separation from an output produced by high-temperature reductive heat treatment of crushed materials recovered from a waste battery. The valuable metals of the present invention may mean high-priced metal components contained in a battery, and may mean nickel, cobalt, manganese, aluminum, copper, and lithium.

The preparing of the output obtained by reductively heat-treating, at a high temperature, the crushed materials recovered from the waste battery includes preparing a battery, crushing the battery into battery crushed materials, and heat-treating the crushed battery crushed materials at a high temperature.

In the step of preparing the battery, the battery may be a method of processing various types of batteries including lithium ions, and the battery may be, for example, a lithium secondary battery separated from an automobile, a secondary battery separated from an electronic device such as a mobile phone, a camera, or a notebook computer, and specifically a lithium secondary battery. More specifically, the battery utilizes a waste battery, thereby providing an environmentally friendly advantage.

In an embodiment, in the step of preparing the battery, the battery may include lithium (Li) and aluminum (Al). Since lithium and aluminum coexist in the battery, after processing the battery, lithium and aluminum may be arranged as a material physically and/or chemically bonded in a generated product.

The step of crushing the battery may mean a process of applying impact or pressure to the battery such that a portion of the battery is separated from the battery. In an embodiment, the step of crushing the battery may mean all of a process of pulverizing the battery, a process of cutting the battery, a process of compressing the battery, and a combination thereof. Specifically, the step of crushing may include all processes by which the battery can be destroyed to obtain crushed materials having a small size.

In an embodiment, the step of crushing the battery may include all processes of compressing the prepared battery or destroying the battery by applying an external force such as a shear force or tensile force. The step of crushing the battery may be performed, for example, using a crusher.

In an embodiment, the step of crushing the battery may be performed at least once. Specifically, the step of crushing may be performed continuously or discontinuously at least once.

In an embodiment, the step of crushing the battery may be performed under a condition of supplying inert gas, carbon dioxide, nitrogen, water, or a combination thereof, or under a vacuum atmosphere condition of 100 torr or less. When performed under the above-described condition, oxygen supply can be suppressed, thereby preventing an electrolyte from reacting with oxygen, preventing explosion caused thereby, and suppressing vaporization of the electrolyte solution, so that flammable gas such as ethylene, propylene, or hydrogen may not be generated.

The step of heat-treating the crushed battery crushed materials at a high temperature may include introducing the battery crushed materials into a furnace capable of raising the battery crushed materials to a high temperature and raising the battery crushed materials to a temperature equal to or higher than a melting point. The battery crushed materials may include, for example, valuable metals such as Ni, Co, Mn, and Li. The high-temperature heat treatment may involve heat treatment conditions for performing a high-temperature reduction reaction without passing the battery through a melting step.

In an embodiment, the step of heat-treating the battery crushed materials at a high temperature may be performed in an atmosphere of at least one gas among inert gas, carbon dioxide, carbon monoxide, hydrocarbon gas, and oxygen. The inert gas may include, for example, at least one of argon and nitrogen. In the gas atmosphere, a reduction reaction of the crushed materials is performed, thereby providing an advantage of increasing a recovery rate of valuable metal elements contained in the battery crushed materials.

In an embodiment, the step of heat-treating the Ni-, Co-, Mn-, and Li-containing battery crushed materials at a high temperature may be performed in a gas atmosphere including at least one of inert gas, carbon dioxide, carbon monoxide, and hydrocarbon gas, and oxygen. In an embodiment, the step may be performed in a gas atmosphere having an oxygen concentration in a range of 0.1 vol% to 2.0 vol%. Specifically, the oxygen concentration may be in a range of 0.4 vol% to 1.2 vol%.

When the oxygen concentration exceeds the upper limit of the above-described range, as the oxygen concentration increases, a reaction of Li₂O + C + O₂(g) = Li₂CO₃ is promoted, but at the same time, LiAlO₂ and Li₅AlO₄ decrease. Specifically, when the oxygen concentration exceeds the upper limit of the above-described range, carbon dioxide is excessively formed during the reduction reaction process and is gasified together with lithium and lost, or generation of Li₂CO₃(s) is excessively increased, making recovery by acid leaching difficult. When the oxygen concentration is below the lower limit of the above-described range, there is a problem of a decreased lithium recovery rate.

In an embodiment, the step of heat-treating the battery crushed materials at a high temperature may be performed in a range of 600°C to 1,500°C. Specifically, the high-temperature heat-treating may be performed in a range of 900°C to 1,500°C, more specifically 1,100°C to 1,500°C, and still more specifically 1,300°C to 1,500°C. In the step of heat-treating the battery crushed materials at a high temperature, as the temperature rises, Li₅AlO₄ is generated due to a reaction of LiAlO₂(s)+2Li₂CO₃(s)=Li₅AlO₄+2CO₂(g), but a LiF(g) vaporization reaction is promoted. Thus, when performed within the above-described range, the yield of lithium can be improved.

When the upper limit of the above-described range is exceeded, there is a problem of lithium loss due to lithium vaporization. Specifically, when the upper limit of the above-described range is exceeded, as the LiF(g) vaporization reaction is excessively promoted, the lithium recovery rate decreases due to loss of lithium.

When the lower limit of the above-described range is not satisfied, sintering and reduction of alloying elements do not proceed smoothly, and a stabilized lithium-containing compound cannot be formed, thereby making it difficult to recover a stabilized compound when recovering a lithium compound in the future. Specifically, when the lower limit of the above-described range is not satisfied, MnO among Li-containing Ni, Co, Mn oxides in the positive electrode material is not dissociated, and MnAl₂O₄ is generated due to a reaction of MnO(s)+2Al(s)+3/2O₂=MnAl₂O₄(s), thereby decreasing a lithium concentration in the lithium compound and causing a problem of a decreased lithium recovery rate.

The step of magnetically separating the high-temperature heat-treated output may magnetically separate the output to separate a first magnetic body having magnetism and a first non-magnetic body having non-magnetism. Magnetic separation may separate particles through contact with a magnetic body using the magnetic body, and various types of magnetic separation methods may be applied.

The first magnetic body may be a composition including Ni, Co, and Mn, which are valuable metals, and specifically may be a composition including a core portion and a shell portion disposed on the core portion. The core portion may include a valuable metal recovery alloy. The core portion of the composition for recovering valuable metals may be recovered from a positive electrode material component in a waste battery.

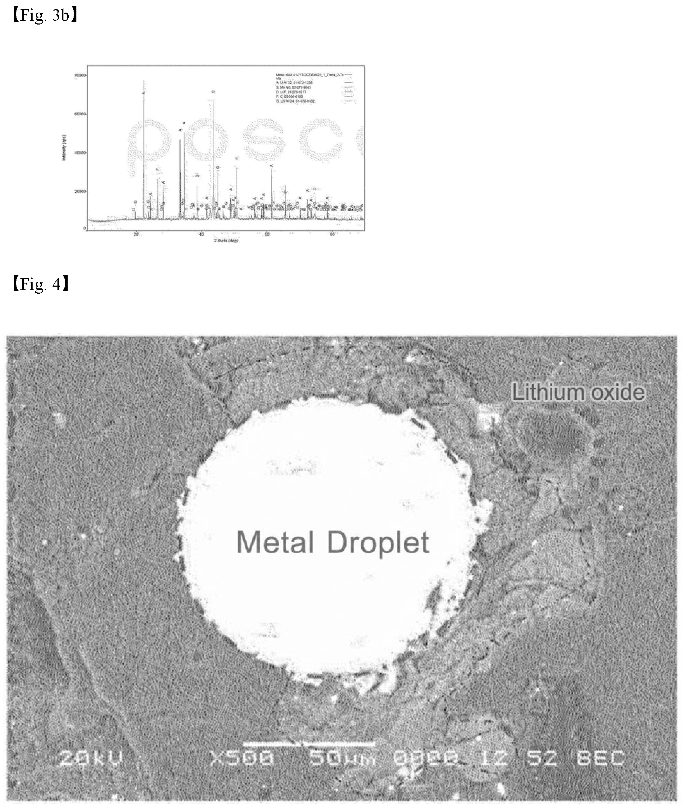

The shell portion is disposed on the core portion and may include a lithium compound. Specifically, when valuable metals are recovered from a waste battery, valuable metals in the waste battery are present in an oxide form and are reduced by graphite in a negative electrode material through a high-temperature heat treatment process. At this time, a copper current collector may be melted and present in a liquid state, and may serve to aggregate the reduced valuable metals. The copper current collector and the aluminum current collector partially perform a reduction reaction with the positive electrode active material oxide, and the remainder reacts with lithium, so that a compound in the form of an oxide containing lithium may remain. A detailed description thereof will be provided below with reference to FIGS. 3A and 3B and FIG. 4.

The second non-magnetic body may include at least one of a compound including Li and a graphite material including carbon, which is not bonded to the valuable metals in the magnetic separation step.

In an embodiment, the magnetic separation step may be performed at a magnetic force strength in a range of 1,000 Gauss to 5,000 Gauss. Specifically, the magnetic separation step may be performed at a magnetic force in a range of 2,000 Gauss to 3,000 Gauss.

As the magnetic separation step is performed within the above magnetic force strength range, there is an advantage of efficiently separating valuable metals. When the magnetic force strength range exceeds the upper limit of the above-described range, even trace amounts of valuable metals are recovered, and thus a recovery rate increases, but a grade of the recovered valuable metals decreases and an amount of impurities such as graphite and copper mixed therewith increases, thereby reducing process efficiency and increasing treatment costs in the next wet smelting process. When the magnetic force strength range is below the lower limit of the above-described range, there is a problem in that the recovery rate of valuable metals decreases, thereby increasing loss of Ni, Co, and Mn.

The step of pulverizing the output having magnetism among the magnetically separated outputs to separate a magnetic body and a non-magnetic body may be a step of pulverizing the magnetically selected first magnetic body. The first magnetic body, as described above, means a core portion including a valuable metal alloy and a compound including lithium disposed on the core portion. The core portion and the shell portion of the first magnetic body may be separated through a pulverization process. Specifically, the first magnetic body may be separated into a second magnetic body and a second non-magnetic body through the above-described pulverization process. The second magnetic body may mean, for example, an NCM alloy including Ni, Co, and Mn, and the second non-magnetic body may be a compound containing lithium, for example lithium aluminate (LiAlO₂).

In an embodiment, the first magnetic body may be separated into the valuable metal recovery alloy and the compound containing lithium by mechanical or physical external force. As described above, not only can the valuable metal recovery alloy be recovered from the valuable metal recovery composition, but the lithium compound can also be separated simultaneously, and thus the recovery rate of lithium is high and the amount of lithium lost can be reduced.

In an embodiment, the pulverization step uses equipment for pulverization using a shear force in the form of a vertical attrition mill, and an RPM of an agitator for the vertical attrition mill may be performed at a shear force in a range of 1 m/sec to 5 m/sec based on tip speed. Specifically, the pulverization step may be performed at a shear force in a range of a tip speed of 2 m/sec to 3 m/sec. As the pulverization step is performed in the above-described shear force range, an NCM alloy, which is the core portion of the first magnetic body, is not pulverized, and only the compound containing lithium, which is the shell portion disposed on the core portion, can be pulverized into fine powder.

At this time, the tip speed may be calculated by the following equation: Tip Speed = Pi × Impeller Diameter × RPM/100.

In an embodiment, when the shear force exceeds the upper limit of the above-described range, after the shell portion of the first magnetic body is separated, the magnetic core portion inside is also pulverized, and since the core portion is a metal having ductility, while being rolled, spherical particles become larger in a plate shape and are then pulverized again into particles having a small size. At this time, in a process of separating the magnetic body of the core portion and the lithium compound of the shell portion using particle size, there is a problem of a decreased recovery rate. When the shear force is below the lower limit of the above-described range, there is a problem in that the lithium compound of the shell portion is not pulverized and is recovered again together with the magnetic body of the core portion.

In an embodiment, the pulverizing may be performed for 20 minutes to 80 minutes. Specifically, the pulverizing may be performed for 30 minutes to 60 minutes. As the pulverizing is performed within the above-described range, recovery rates of valuable metals such as Ni, Co, Mn, and Li can be increased.

When the pulverizing exceeds the upper limit of the above-described range, the magnetic body including the magnetic body of the core portion and the lithium compound of the shell portion is excessively pulverized and rolled into a plate shape due to ductility, and continuously over-pulverized so that plate-shaped particles are broken again into fine particles, thereby causing a problem in that the effect of magnetic force is insufficient in additional magnetic selection. When the pulverizing is below the lower limit of the above-described range, there is a problem in that the shell portion including the lithium compound is not easily separated from the magnetic body having a core-shell structure.

In an embodiment, after the pulverization step, the method may include an additional separation step by one of particle size separation, flotation selection, and magnetic separation. The flotation selection is a method of separating particles in consideration of a difference in specific gravity by material, and may be, for example, a method capable of separating particles based on the size of specific gravity of particles corresponding to a specific solvent using the specific solvent.

When the core portion and the shell portion are separated through the pulverization step, the valuable metal alloy in the first magnetic body is separated in a state having a large particle size because the particles are elongated due to the ductile characteristics of the metal, and the compound containing lithium may be pulverized into a fine powder form having a small particle size. Specifically, the first magnetic body may be separated into a compound containing lithium having a particle size smaller than 70 µm to 80 µm and a valuable metal alloy having a particle size of 70 µm to 80 µm or more.

In an embodiment, the core portion and the shell portion separated through the pulverization step may be subjected to particle size separation based on a particle size of 70 µm to 80 µm. The compound containing lithium, which is the shell portion, has a particle size smaller than the above-described particle size criterion, and the valuable metal alloy, which is the core portion, has a particle size larger than the above-described particle size, and thus the valuable metal alloy and the compound containing lithium can be easily separated through particle size separation.

In another embodiment, the core portion and the shell portion separated through the pulverization step may be subjected to magnetic selection. Through the magnetic selection, a valuable metal alloy including Co and having magnetism and a compound containing lithium and having no magnetism can be easily separated.

In still another embodiment, the core portion and the shell portion separated through the pulverization step may be subjected to flotation selection. Through the flotation selection, the core portion including valuable metals and precipitated, and the compound including lithium and floating, can be easily separated.

In an embodiment, the method may include flotation-selecting the first non-magnetic body. The first non-magnetic body having non-magnetism separated in the first magnetic selection step may include graphite.

In an embodiment, the flotation-selecting may be a step of selecting a float including graphite and a precipitate including valuable metals. Specifically, the flotation-selecting may be a step of floating hydrophobic graphite in the first non-magnetic body and precipitating and separating a compound including lithium and fine valuable metal alloys.

In an embodiment, the precipitate may be magnetically separated to recover a material including valuable metals, and the recovered material may be pulverized together with the output having magnetism. A detailed description of the pulverizing is the same as described above.

In an embodiment, after the pulverizing of the output having magnetism among the magnetically separated outputs to separate the magnetic body and the non-magnetic body, the method may include drying a final output. Through the drying step, the valuable metal alloy, the compound including lithium, and graphite may be dried in powder form.

In an embodiment, the drying of the final output may be performed in a range of 80°C to 200°C. Specifically, the drying of the final output may be performed in a range of 100°C to 150°C.

When drying is performed above the upper limit of the above-described temperature range, there is a problem in that combustible materials such as graphite are combusted. When drying is performed below the lower limit of the above-described temperature range, moisture in the final output, which is in a powder state, is not completely dried, and a product having a high moisture content is discharged, thereby causing a problem in that the amount of acid used increases in a leaching process of a downstream wet smelting process.

FIGS. 3A and 3B are XRD analysis results of a composition for recovering valuable metals formed after heat treatment according to an embodiment of the present invention.

Referring to FIGS. 3A and 3B, it can be confirmed that the composition for recovering valuable metals reductively heat-treated at a high temperature forms a compound containing lithium, for example lithium oxide, by being bonded to an Al component in the battery without being reduced to form an alloy such as Ni, Co, and Mn. It can be confirmed that the lithium oxide is formed as, for example, LiAlO₂, Li₅AlO₄, and Li₂CO₃. In an embodiment, the composition for recovering valuable metals may further include LiF. The LiF may be a result according to a residual amount of electrolyte depending on the degree of pretreatment.

In an embodiment, LiAlO₂ may include, as an XRD peak, at least one of 20.5° to 21.5°, 29.0° to 29.5°, 31.5° to 32.0°, 32.2° to 33.0°, 60.5° to 61.5°, and 70.0° to 72.0°. Li₅AlO₄ may include, as an XRD peak, at least one of 19.5° to 20.2° and 21.6° to 22.2°.

A LiAl₅O₈ composition may include, as an XRD peak, at least one of 15.0° to 17.4°, 24.2° to 26.1°, 31.4° to 33.1°, 36.2° to 40.3°, 46.1° to 47.3°, 61.1° to 63.4°, and 66.2° to 68.7°. A LiF composition may include, as an XRD peak, at least one of 37.5° to 40.2°, 43.9° to 46.5°, and 64.5° to 66.5°.

A Li₃PO₄ composition may include, as an XRD peak, at least one of 29.2° to 40.1° and 52° to 77.1°. A Li₂SiO₃ composition may include, as an XRD peak, at least one of 17.7° to 20.1°, 26.1° to 29.5°, 32.2° to 36.2°, and 37.6° to 39.7°. A Li₄SiO₄ composition may include, as an XRD peak, at least one of 16.2° to 18.3°, 21.4° to 25.2°, 34.2° to 39.7°, and 59.2° to 63.4°.

A Li₂Si₂O₅ composition may include, as an XRD peak, at least one of 16.2° to 18.3°, 21.4° to 25.2°, 34.2° to 39.7°, and 59.2° to 63.4°. A Li₂CO₃ composition may include, as an XRD peak, at least one of 24.0° to 26.0°, 27.0° to 29.0°, 34.0° to 36.0°, and 37.0° to 39.0°.
*107

FIG. 4 is an SEM photograph of a composition for recovering valuable metals according to an embodiment of the present invention.

Referring to FIG. 4, the composition for recovering valuable metals according to an embodiment of the present invention includes a core portion and a shell portion disposed on the core portion. The core portion may include a valuable metal recovery alloy. The valuable metal of the present invention may mean a high-priced metal component contained in a battery, and may mean nickel, cobalt, manganese, aluminum, copper, and lithium. The core portion of the composition for recovering valuable metals may be recovered from a positive electrode material component in a waste battery.

The shell portion is disposed on the core portion and may include a lithium compound. Specifically, when valuable metals are recovered from a waste battery, valuable metals in the waste battery are present in an oxide form and are reduced by graphite in a negative electrode material through a high-temperature heat treatment process. At this time, a copper current collector may be melted and present in a liquid state, and may serve to aggregate the reduced valuable metals. The copper current collector and the aluminum current collector partially perform a reduction reaction with the positive electrode active material oxide, and the remainder reacts with lithium, so that a compound in the form of an oxide containing lithium may remain.

In an embodiment, the lithium (Li) content in the lithium compound may be 4 wt% to 35 wt%, specifically 4 wt% to 25 wt%, based on 100 wt% of the entire lithium compound. As the Li content in the lithium compound satisfies the above-described range, it is possible to satisfy a composition including a lithium-containing compound having a high lithium content and an excellent lithium recovery rate. When the Li content exceeds the upper limit of the above-described range, a Li₂O content increases, thereby generating a large amount of compound that is difficult to recover due to a water solubility problem and decreasing a lithium recovery rate. When the Li content is below the lower limit of the above-described range, there is a problem of low utility value due to a small lithium recovery rate.

In an embodiment, the lithium compound may include at least one of LiAlO₂, Li₅AlO₄, LiAl₅O₈, Li₂CO₃, LiF, Li₃PO₄, Li₂SiO₃, Li₄SiO₄, and Li₂Si₂O₅. In an embodiment, the lithium compound may include lithium aluminum oxide.

The lithium compound may be, for example, lithium oxide. The lithium-aluminum oxide may be implemented in an oxide form by physical or chemical bonding of lithium contained in the composition.

In an embodiment, the lithium compound may include lithium aluminum oxide. Specifically, the content of the lithium aluminum oxide may be 45.0 wt% to 97.0 wt% based on 100 wt% of the valuable metal recovery composition. Specifically, the content may be 70 wt% to 90 wt%.

When the content of the lithium aluminum oxide exceeds the upper limit of the above-described range, lithium hydroxide, lithium carbonate, lithium fluoride, and the like having high water solubility are dissolved in large amounts in water during a selection process. When the content of the lithium aluminum oxide is below the lower limit of the above-described range, this means that most of the lithium compound was recovered in the form of LiAlO₂ having low water solubility, and that lithium compounds having high water solubility were dissolved in water during the selection process, thereby causing a problem in that lithium must be recovered again from the water used in the selection process.

In an embodiment, the lithium compound may include an oxide containing lithium and silicon. Specifically, the content of the oxide containing lithium and silicon may be 2 wt% to 30 wt%, based on 100 wt% of the valuable metal recovery composition. Specifically, the content may be 10 wt% to 25 wt%. As the oxide containing lithium and silicon satisfies the above-described range, there is an advantage in increasing an actual yield of lithium during acid leaching by securing a stable product under high-temperature and appropriate oxygen concentration atmosphere.

When the content of the oxide containing lithium and silicon exceeds the upper limit of the above-described range, this means that the oxide was exposed to a maximum temperature for a long time during the high-temperature reduction reaction, thereby causing problems of reduced productivity of a reactor and increased energy costs. When the content of the oxide containing lithium and silicon is below the lower limit of the above-described range, insufficient heat energy was provided for lithium to react with aluminum, silicon, and the like to form a lithium compound such as lithium aluminate, or lithium was volatilized and removed because the temperature of the reactor was too high, thereby causing a problem of a decreased recovery rate for recovering lithium.

In an embodiment, based on 100 wt% of the valuable metal recovery composition, the valuable metal recovery composition may include silicon (Si) of 10 wt% or less. Specifically, the silicon may be 1.0 wt% or less, and more specifically 0.5 wt% or less.

When the silicon (Si) content exceeds the upper limit of the above-described range, there is a problem in that process time and costs increase in removing silicon to a battery grade in a downstream wet smelting process. When the silicon (Si) content is below the lower limit of the above-described range, the remaining wt% of the introduced raw material silicon is dispersed into graphite and a lithium compound, thereby causing a problem in that process time and costs increase in a process of refining and smelting graphite and the lithium compound.

In an embodiment, Li₂CO₃ may be included in an amount of 30% or less based on 100 wt% of the entire composition. The Li₂CO₃ may be included in an amount of 15.0% or less, and more specifically 5% or less. As the Li₂CO₃ content satisfies the above-described range, there is an advantage of preventing generation of a large amount of compound that is difficult to recover due to a water solubility problem.

In an embodiment, LiF may be included in an amount of 30 wt% or less based on 100 wt% of the entire composition. The LiF may be included in an amount of 6.5 wt% to 24.0 wt%, and more specifically 6.5 wt% to 15 wt% or less, based on 100 wt% of the entire composition. As the LiF content satisfies the above-described range, there is an advantage of preventing generation of a large amount of compound that is difficult to recover due to a water solubility problem.

When the LiF exceeds the upper limit of the above-described range, pH adjustment becomes difficult due to mixing of sulfate ions and fluoride ions during sulfuric acid leaching, thereby causing a problem of a decreased Li recovery rate. When the LiF is below the lower limit of the above-described range, Li₂SiO₃, Li₄SiO₄, Li₂Si₂O₅, and the like increase, making sulfuric acid leaching difficult and causing a problem of delayed leaching process time.

In an embodiment, the total content of Li₂CO₃ and LiF may be 50% or less based on 100 wt% of the entire composition. Specifically, the total content may be 0.5% to 50%, and more specifically 0.5% to 30% or less.

When the total content exceeds the upper limit of the above-described range, a large amount of compound that is difficult to recover due to a water solubility problem is generated, thereby making Li recovery difficult. When the total content is below the lower limit of the above-described range, Li₂SiO₃, Li₄SiO₄, Li₂Si₂O₅, and the like among the compounds increase, making sulfuric acid leaching difficult and causing a problem of delayed leaching process time.

As the total amount of Li₂CO₃ and LiF satisfies the above-described range, generation of a large amount of compound that is difficult to recover due to a water solubility problem is prevented, and a large amount of stable compound having an excellent leaching rate in sulfuric acid is generated by appropriately adjusting a high temperature and an oxygen concentration, thereby providing an advantage of increasing lithium recovery efficiency.

In an embodiment, Li₃PO₄ may be included in an amount of 10 wt% or less based on 100 wt% of the entire composition. The Li₃PO₄ may be included in an amount of 5 wt%, specifically 3 wt% or less, and more specifically 0.1 wt% to 0.7 wt%, based on 100 wt% of the entire composition. As the Li₃PO₄ content satisfies the above-described range, it is possible to prevent a decrease in Li recovery rate due to leaching behavior according to a pH change caused by PO₃⁻anions during acid leaching and a problem that LiOH is generated during impurity removal. As the Li₃PO₄ content satisfies the above-described range, it is possible to prevent a decrease in Li recovery rate due to problems such as leaching behavior according to a pH change caused by PO₃⁻anions during acid leaching and generation of LiOH during impurity removal.

Hereinafter, preferred Examples and Comparative Examples of the present invention will be described. However, the following Examples are merely preferred embodiments of the present invention, and the present invention is not limited to the following Examples.

### <Experimental Example> - Control of Waste Battery Conditions

Battery crushed materials may be crushed through a crushing step such that the longest length among a width and a length is 100 mm or less. Specifically, an optimum size of the battery crushed materials may be 10 mm to 40 mm as the longest length among a width and a length. This is to prevent a possibility of fire occurring when the battery is crushed.

When a reaction distance between a positive electrode current collector and a negative electrode current collector is less than 10 mm, when the battery crushed materials are heat-treated and reduced, lithium reacts with aluminum, and thus a composition in a form in which a lithium compound is bonded to a surface of a valuable metal recovery alloy can be obtained. Specifically, at 10 mm or more, lithium in aluminum, a positive electrode material, an electrolyte solution, and a negative electrode material does not react with aluminum and volatilizes, thereby causing a problem in that purity of lithium reacting with aluminum decreases.

### <Experimental Example 1>

### 1. Step of Preparing Valuable Metal Recovery Composition

A cell, module, or pack, which is an electric vehicle waste battery including a positive electrode material containing lithium ions, a negative electrode material of graphite, an aluminum current collector, a separator, an electrolyte solution, and a copper current collector, was prepared. The waste battery was frozen at -30°C or lower and then crushed, or after being discharged under a brine discharge or electric discharge condition, the waste battery was crushed by a shredder under atmospheric conditions or inert gas conditions such that the longest length among a width and a length was 100 mm or less.

After a composition for recovering valuable metals was obtained by the above-described method, the crushed battery crushed materials were heat-treated at 1,300°C under an oxygen partial pressure condition of 0.5% to perform a reduction process. After the reduction process, as described above, a composition for recovering valuable metals was generated, which included a core portion including valuable metals and a shell portion including a compound containing lithium on the core portion.

Table 1 below shows components and contents of the composition for recovering valuable metals generated by the above-described method.

The components and contents in Table 1 below were measured by a quantitative analysis method using ICP-OES equipment, C/S analysis equipment, and the like.

**[Table 1]**

| | Li(wt%) | Ni(wt%) | Co(wt%) | Mn(wt%) | Al(wt%) | Cu(wt%) | C(wt%) | Rem arks |
|---|---|---|---|---|---|---|---|---|
| Exp erim enta l Exa mpl e 1 | 3.91 | 19.85 | 6.13 | 6.56 | 7.20 | 11.43 | 33.70 | Exa mpl e |

### 2. Primary Magnetic Selection Step

The valuable metal recovery composition subjected to the high-temperature reduction process was separated into a magnetic body and a non-magnetic body using a magnetic separator having a magnetic force strength of 3000 Gauss.

Experimental Example 2_1 in Table 2 below shows components and contents of the magnetic body and the non-magnetic body separated by passing through the 3000 Gauss magnetic separator.

**[Table 2]**

| | Mag netis m | Total Content (wt%) | Li(wt%) | Ni(wt%) | Co(wt%) | Mn(wt%) | Al(wt%) | Cu(wt%) | C(wt%) | Rem arks |
|---|---|---|---|---|---|---|---|---|---|---|
| Exper iment al Exam ple 2_1 | Mag netic | 64.00 | 4.96 | 30.26 | 9.35 | 9.75 | 7.62 | 12.36 | 10.30 | Exa mple |
| Exper iment al Exam ple 2_2 | Non - mag netic | 36.00 | 2.04 | 1.34 | 0.40 | 0.89 | 6.44 | 9.77 | 75.30 | Exa mple |

Referring to Table 2, it was confirmed that, in the case of the magnetic body separated by magnetic selection as in Experimental Example 2_1, the magnetic body included NCM metals, which are valuable metals, and had high contents of Li, Ni, Co, and Mn. In the case of particles separated as the non-magnetic body by magnetic selection as in Experimental Example 2_2, it was confirmed that Li, Al, and graphite particles were mostly separated and the C content was high.

### 3_1. Flotation Selection Step

The non-magnetic body separated by magnetic selection as in Experimental Example 2_2 was subjected to flotation selection using a Denver Sub_A flotation selection apparatus of Experimental Example 3_1 at a pulp concentration of 30%, an impeller rotation speed of 500 rpm, kerosene of 0.1 ml/100 g, and MIBC of 0.1 ml/100 g.

Through the flotation selection, lightweight graphite powder floated to an upper portion of the apparatus and was separated to recover graphite.

Table 3 below shows components and contents of products subjected to the flotation selection process.

**[Table 3]**

| | Precipitat ion | Total Content (wt%) | Li(wt%) | Ni(wt%) | Co(wt%) | Mn(wt%) | Al(wt%) | Cu(wt%) | C(wt%) | Rem arks |
|---|---|---|---|---|---|---|---|---|---|---|
| Exper | Float | 81.11 | 0.44 | 0.33 | 0.17 | 0.12 | 0.48 | 1.25 | 91.32 | Exa |
| iment al Exam ple3_ 1 | (O/F) | | | | | | | | | mple |
| Exper iment al Exam ple3_ 2 | Precipitat e (U/F) | 18.89 | 1.06 | 1.04 | 0.37 | 1.09 | 10.01 | 18.04 | 5.75 | Exa mple |

Referring to Table 3, it can be seen that the C content of the material floated as Over Flow (O/F) is 92.5%, which is significantly increased compared with the C content of 35.07% of the initial battery crushed materials and the C content of 75.30% of the raw material separated as a non-magnetic body by magnetic selection and introduced into the flotation separator. In addition, it can be seen that the C content of the precipitate remaining as Under Flow (U/F) is 5.75%, and hydrophobic C was mostly recovered as the float. In addition, looking at a lithium content ratio of the float and the precipitate, most of lithium did not float and remained in the precipitate, and thus it can be seen that C and lithium can be efficiently separated through flotation selection. In addition, since the precipitate has a high aluminum content, it is determined that most of the lithium remains in the precipitate in the form of LiAlO₂. In addition, Cu did not float and mostly remained as the precipitate, and the content was 18.04%.

### 4. Pulverization Step and Secondary Magnetic Selection Step

The magnetic body subjected to the magnetic separation step of item 2 is pulverized using an attrition mill apparatus, which is a vertical stirring mill, under conditions of 500 rpm, impeller tip speed of 2.8 m/sec, pulverization time of 60 minutes, and solid content weight of 30%. As described above, the magnetic body is a composition for recovering valuable metals, which includes a core portion including valuable metals and a shell portion including a compound containing lithium disposed on the core portion, and it was confirmed that the core portion and the shell portion were separated as the valuable metal recovery composition underwent the pulverization process.

Table 5 below shows components and contents of products obtained by separating the magnetic body including the core portion and the shell portion and separating the same according to particle size.

**[Table 4]**

| | Mag netis m | Total Content (wt%) | Li(wt%) | Ni(wt%) | Co(wt%) | Mn(wt%) | Al(wt%) | Cu(wt%) | Re mar ks |
|---|---|---|---|---|---|---|---|---|---|
| Experi mental Examp le 4_1 | Mag netic | 67.97 | 0.37 | 42.19 | 12.94 | 13.51 | 2.15 | 3.79 | Exa mpl e |
| Experi mental Examp le4_2 | Non-mag netic | 32.03 | 14.56 | 1.15 | 1.40 | 1.21 | 17.96 | 27.45 | Exa mpl e |

Referring to Table 5, in order to separate the product subjected to the pulverization process into an alloy core portion containing valuable metals and a lithium compound, the product was separated into a magnetic body and a non-magnetic body using a 3000 Gauss magnetic separator. As a result, it was confirmed that Experimental Example 4_1, which is the core portion including valuable metals, included excessive amounts of Ni, Co, and Mn. Experimental Example 4_2 separated as the non-magnetic body was a product obtained by pulverizing the shell portion including lithium, and it was confirmed that the lithium content was high. The output recovered as a magnetic product in the magnetic selection is such that, in the pulverization process, the shell portion in the form of an oxide is pulverized, and the ductile core portion is continuously pulverized inside the pulverizer and rolled into a plate shape, thereby causing a phenomenon in which the particle size becomes larger than the initial particle size and the thickness becomes thinner. In contrast, since the shell portion has a strong brittleness in the form of an oxide, pulverization continues as pulverization time increases, and the particle size decreases.

### 5. Secondary Separation Step

Although Experimental Example 4_1 subjected to the pulverization step can also be separated by particle size separation using a difference in pulverization characteristics between the alloy as the core portion and the oxide compound as the shell portion, it is more preferable to perform secondary selection through a magnetic selection process at a magnetic force strength of 3000 Gauss using the property that the alloy of the core portion has magnetism. At this time, when separation is performed using magnetic selection, the valuable metal recovery rate of the core portion may be further increased compared with particle size separation. When particle size separation is applied, separation should be performed using a mesh having a mesh size of 75 µm or 45 µm. At this time, coarse particles are recovered as an NCM alloy portion, and fine particles are recovered as Li oxide.

### 6. Drying Step

The magnetic body including Ni, Co, and Mn, the non-magnetic body including Li, and graphite separated through the above-described steps were reduced to a moisture content of 30% using a drum-type dehydrator or a centrifugal dehydrator, and then dried to a moisture content of 5% or less through a drying step using hot air at 100°C to 200°C, and recovered.

Table 5 below shows components and contents of final products recovered through the above-described steps.

**[Table 5]**

| Main Com pone nt | Total Content (wt%) | Li(wt%) | Ni(wt%) | Co(wt%) | Mn(wt%) | Al(wt%) | Cu(wt%) | C(wt%) | Remar ks |
|---|---|---|---|---|---|---|---|---|---|
| Valu able Meta l Allo y | 48.35 | 0.37 | 42.19 | 12.94 | 13.51 | 2.15 | 3.79 | 7.16 | Experi mental Exam ple 4_1 |
| Lithi um Com poun d | 24.95 | 9.55 | 1.11 | 1.02 | 1.17 | 15.04 | 23.96 | 12.70 | Experi mental Exam ple4_2 and Experi mental Exam ple 3_2 |
| Grap hite | 26.69 | 0.44 | 0.33 | 0.17 | 0.12 | 0.48 | 1.25 | 91.32 | Experi mental Exam ple 3_1 |

Referring to Table 5, it can be seen that the valuable metal alloy mainly composed of Ni, Co, and Mn can be recovered from a magnetic body separated through magnetic selection, pulverization, and magnetic selection steps, as in Experimental Example 4_1. The lithium compound is mainly composed of lithium and can be recovered from a total amount of the non-magnetic body separated through magnetic selection, pulverization, and magnetic selection steps, as in Experimental Example 4_2, and the material precipitated through flotation selection, as in Experimental Example 3_2. Graphite can be recovered by separating the material floating through flotation selection, as in Experimental Example 3_1. As described above, it was confirmed that, by performing the above-described battery processing method, a valuable metal alloy containing valuable metals such as Ni, Co, and Mn can be recovered, and at the same time, a lithium compound having a high lithium content can be separated, thereby increasing recovery rates of valuable metals Li, Ni, Co, and Mn. In addition, it was confirmed that graphite can be separately separated to increase a recovery rate of graphite usable as a negative electrode material.

### <Experimental Example 2>: Change in Components of Magnetic Material and Non-Magnetic Material According to Change in Magnetic Force Strength

Table 6 below shows changes in components of a magnetic material and a non-magnetic material according to a change in magnetic force strength during primary magnetic selection.

**[Table 6]**

| Magn etic Force Stren gth [G] | Clas sific atio n | Weight [wt%] | Li | | Ni | | Co | | Mn | | Al | | Cu | |
|---|---|---|---|---|---|---|---|---|---|---|---|---|---|---|
| | | | [WT%] | DIST ,% | [WT%] | DIST ,% | [WT%] | DIST ,% | [WT%] | DIST ,% | [WT%] | DIST ,% | [WT%] | DIST ,% |
| 500 | Mag neti c | 7.23 | 2.66 | 35.93 | 46.40 | 29.85 | 16.00 | 36.61 | 13.30 | 38.17 | 5.65 | 44.93 | 4.90 | 6.98 |
| | Bod y | | | | | | | | | | | | | |
| | Non - Mag neti c Bod y | 92.77 | 1.50 | 64.07 | 8.50 | 70.15 | 2.16 | 63.39 | 1.68 | 61.83 | 0.54 | 55.07 | 5.09 | 93.02 |
| 1000 | Mag neti c Bod y | 32.53 | 2.92 | 60.30 | 38.40 | 87.85 | 13.30 | 91.18 | 11.10 | 86.16 | 6.46 | 33.26 | 8.38 | 46.49 |
| | Non - Mag neti c Bod y | 67.47 | 2.51 | 39.70 | 2.56 | 12.15 | 0.62 | 8.82 | 0.86 | 13.84 | 6.25 | 66.74 | 4.65 | 53.51 |
| 2000 | Mag neti c Bod y | 36.11 | 3.09 | 59.66 | 36.80 | 96.12 | 12.40 | 97.63 | 10.70 | 94.09 | 7.24 | 75.33 | 5.94 | 47.04 |
| | Non - Mag neti c Bod y | 63.89 | 1.15 | 40.34 | 0.84 | 3.88 | 0.17 | 2.37 | 0.38 | 5.91 | 1.34 | 24.67 | 3.78 | 52.96 |
| 3000 | Mag neti c Bod y | 36.19 | 3.26 | 42.98 | 33.40 | 92.48 | 11.20 | 95.6. | 9.54 | 91.54 | 7.20 | 84.66 | 6.01 | 48.98 |
| | Non - Mag neti c Bod y | 63.81 | 1.25 | 57.02 | 1.54 | 7.52 | 0.29 | 4.37 | 0.50 | 8.46 | 0.74 | 15.34 | 3.55 | 51.02 |
| 5000 | Mag neti c Bod y | 35.61 | 3.08 | | 33.50 | 91.82 | 11.30 | 94.27 | 9.55 | 89.95 | 6.77 | 39.77 | 5.04 | 37.28 |
| | Non - Mag neti c Bod y | 64.39 | 2.26 | | 1.65 | 8.18 | 0.38 | 5.73 | 0.59 | 10.05 | 5.67 | 60.23 | 4.69 | 62.72 |

Referring to Table 6, when examining changes in components of the magnetic body and the non-magnetic body according to a change in magnetic force strength during primary magnetic selection, at weak magnetic force strengths of 500 Gauss and 1000 Gauss (G), the grade of the NCM positive electrode material recovered as a magnetic product is high, but the recovery rate (Dist.) is low at 90% or less, and the Li content and recovery rate decrease. However, at 2000 Gauss or more, it can be confirmed that most of the NCM positive electrode material is recovered as a magnetic body.

### <Experimental Example 3>: Secondary Magnetic Selection After Controlling Pulverization Conditions

Table 7 below shows results obtained by pulverizing a magnetic body after primary magnetic selection and then separating the pulverized product into a magnetic body and a non-magnetic body again using a 3000 Gauss magnetic separator.

At this time, a vertical-stirring ball mill (Attrition Mill) was used as a pulverizer, and pulverization conditions were an RPM of 500 (Tip Speed: 2.65 m/sec), a pulverization container size of 1 L, a solid concentration of 30%, and a pulverization time of 0 minutes to 90 minutes. The magnetic body and the non-magnetic body were analyzed for each pulverization time.

**[Table 7]**

| Pulv eriza tion Tim e [min ] | Class ificati on | Weight [wt%] | Li | | Ni | | Co | | Mn | | Al | | Cu | |
|---|---|---|---|---|---|---|---|---|---|---|---|---|---|---|
| | | | [WT%] | DIST ,% | [WT%] | DIST ,% | [WT%] | DIST ,% | [WT%] | DIST ,% | [WT%] | DIST ,% | [WT%] | DIST ,% |
| 10 | Magn etic Body | 68.12 | 2.41 | 46.31 | 53.90 | 86.03 | 18.40 | 87.18 | 15.30 | 85.82 | 0.70 | 9.35 | 6.56 | 86.54 |
| | Non-Magn etic Body | 31.88 | 5.97 | 53.69 | 18.70 | 13.97 | 5.78 | 12.82 | 5.40 | 14.18 | 14.50 | 90.65 | 2.18 | 13.46 |
| 30 | Magn etic Body | 55.93 | 1.53 | 21.98 | 51.30 | 92.54 | 16.40 | 95.15 | 14.70 | 88.39 | 4.68 | 35.27 | 8.07 | 82.58 |
| | Non-Magn etic Body | 44.07 | 6.89 | 78.02 | 5.25 | 7.46 | 1.06 | 4.85 | 2.45 | 11.61 | 10.90 | 64.73 | 2.16 | 17.42 |
| 60 | Magn etic Body | 82.87 | 0.85 | 19.79 | 41.00 | 92.32 | 13.80 | 93.06 | 11.70 | 91.59 | 2.39 | 25.54 | 4.86 | 72.54 |
| | Non-Magn etic Body | 17.13 | 16.67 | 80.21 | 16.50 | 7.68 | 4.98 | 6.94 | 5.20 | 8.41 | 33.70 | 74.46 | 8.90 | 27.46 |
| 90 | Magn etic Body | 59.81 | 0.56 | 8.69 | 43.40 | 85.56 | 13.30 | 83.09 | 13.80 | 79.86 | 2.21 | 16.96 | 6.89 | 68.39 |
| | Non-Magn etic Body | 40.19 | 8.76 | 91.31 | 10.90 | 14.44 | 4.03 | 16.91 | 5.18 | 20.14 | 16.10 | 83.04 | 4.74 | 31.61 |

Referring to Table 7, at an early pulverization time point of 10 minutes, only a portion of the lithium compound of the shell portion coated on the NCM alloy portion was pulverized, and thus the recovery rates of the NCM alloy portion recovered as a magnetic body were only about Ni 86%, Co 87%, and Mn 85%. However, when the pulverization time reached 30 minutes to 60 minutes, it was confirmed that Ni, Co, and Mn were recovered at a recovery rate of 90% or more.

In addition, when the pulverization time exceeded 60 minutes and exceeded 90 minutes, most of the lithium compound was pulverized and recovered as non-magnetic material at a high recovery rate of 91%. However, after all of the shell portion was removed from the NCM alloy portion, which is the core portion, the core portion was rolled into a plate shape due to ductility and continuously over-pulverized, so that the plate-shaped particles were broken again into fine particles, and the particles became excessively fine, thereby causing a problem in that the influence exerted by magnetic force on a single particle became insufficient. Accordingly, even though the finely pulverized NCM alloy portion had magnetism during magnetic selection, it was not recovered as a magnetic body, and it was confirmed that the recovery rates of Ni, Co, and Mn decreased again to 85% or less.

Although preferred embodiments have been described in detail above, the scope of the present invention is not limited thereto, and various modifications and improvements made by those skilled in the art using the basic concept defined in the following claims also belong to the scope of the present invention.

## Claims

1. A battery processing method comprising:
preparing an output obtained by reductively heat-treating, at a high temperature, crushed materials recovered from a waste battery;
magnetically separating the heat-treated output into a first magnetic body and a first non-magnetic body;
pulverizing the first magnetic body to separate the first magnetic body into a second magnetic body and a second non-magnetic body; and
flotation-selecting the first non-magnetic body.

2. The battery processing method of claim 1,
wherein preparing the output obtained by reductively heat-treating, at a high temperature, crushed materials recovered from the waste battery comprises:
preparing a battery;
crushing the battery into battery crushed materials; and
heat-treating the crushed battery crushed materials in a temperature range of 600°C to 1,500°C.

3. The battery processing method of claim 2,
wherein the heat-treating is performed at an oxygen concentration of 0.1 vol% to 2.0 vol%.

4. The battery processing method of claim 1,
wherein the first magnetic body comprises a valuable metal alloy including valuable metals, and
wherein at least a portion of the valuable metal alloy has a core-shell structure in which a lithium compound is disposed on at least a partial region of a surface of the valuable metal alloy.

5. The battery processing method of claim 1,
wherein the second non-magnetic body comprises at least one of a compound containing lithium and graphite.

6. The battery processing method of claim 1,
wherein the magnetic separation is performed at a magnetic force strength in a range of 1,000 Gauss to 5,000 Gauss.

7. The battery processing method of claim 1, further comprising additionally separating the first magnetic body based on a particle size of 50 µm to 70 µm.

8. The battery processing method of claim 1,
wherein pulverizing the output having magnetism among the magnetically separated outputs to separate the second magnetic body and the second non-magnetic body is performed at a shear force in a range of 1 m/sec to 5 m/sec.

9. The battery processing method of claim 1,
wherein pulverizing the output having magnetism among the magnetically separated outputs to separate the second magnetic body and the second non-magnetic body is performed for 20 minutes to 80 minutes.

10. The battery processing method of claim 1,
wherein pulverizing the output having magnetism among the magnetically separated outputs to separate a magnetic body and a non-magnetic body is performed by one of particle size separation, flotation selection, and magnetic separation after pulverizing the output having magnetism.

11. The battery processing method of claim 10,
wherein the particle size separation is performed based on a particle size of 70 µm to 80 µm.

12. The battery processing method of claim 10,
wherein the flotation-selecting comprises selecting a float including graphite and a precipitate including valuable metals.

13. The battery processing method of claim 11,
wherein the precipitate is magnetically separated to recover a material including valuable metals, and
wherein the recovered material is pulverized together with the output having magnetism.

14. The battery processing method of claim 1, further comprising, after pulverizing the output having magnetism among the magnetically separated outputs to separate a magnetic body and a non-magnetic body,
drying a final output.

15. The battery processing method of claim 14,
wherein drying the final output is performed in a temperature range of 80°C to 200°C.

16. The battery processing method of claim 1,
wherein, in preparing the output obtained by reductively heat-treating, at a high temperature, crushed materials recovered from the waste battery,
at least a portion of the output comprises a valuable metal recovery composition comprising:
a core portion comprising a valuable metal recovery alloy; and
a shell portion disposed on the core portion and comprising a lithium compound.
